# EUROPÄISCHE PATENTSCHRIFT

(11) **EP 3 132 711 B1**
(45) Veröffentlichungstag und Bekanntmachung des Hinweises auf die Patenterteilung: **10.04.2024**
(21) Anmeldenummer: 16169110.0
(22) Anmeldetag: 11.05.2016
(51) Int. Cl.: A47B 47/02, A01D 41/127, A01D 41/14

(54) **LANDWIRTSCHAFTLICHE ERNTEMASCHINE**
AGRICULTURAL HARVESTER
MOISSONNEUSE AGRICOLE

(30) Priorität: 17.08.2015 DE 102015113527
(43) Veröffentlichungstag der Anmeldung: 22.02.2017
(73) Patentinhaber: CLAAS Selbstfahrende Erntemaschinen GmbH, 33428 Harsewinkel (DE)
(72) Erfinder: Wilken, Andreas, 49143 Bissendorf (DE); Heitmann, Christoph, 48231 Warendorf (DE); Bormann, Bastian, 33334 Gütersloh (DE); Baumgarten, Dr., Joachim, 48361 Beelen (DE); Neu, Sebastian, 49196 Bad Laer (DE); Kettelhoit, Boris, 33335 Gütersloh (DE); Bussmann, Christoph, 33428 Harsewinkel (DE); Vöcking, Henner, 33397 Rietberg (DE); Krause, Thilo, 39249 Glinde (DE); Herter, Felix, 33428 Harsewinkel (DE)
(74) Vertreter: CLAAS Gruppe

(56) Entgegenhaltungen:
- EP-A1- 3 085 221
- EP-A2- 2 687 923
- EP-A2- 2 837 279

## Beschreibung

Die Erfindung betrifft eine landwirtschaftliche Erntemaschine mit den Merkmalen des Oberbegriffs von Anspruch 1.

Bei der in Rede stehenden landwirtschaftlichen Erntemaschine handelt es sich um jedwede Erntemaschine, die mit einem als Erntevorsatz ausgebildeten Schneidwerk zum Schneiden und Aufnehmen von Erntegut ausgestattet ist. Hierbei kann es sich um Mähdrescher, Feldhäcksler, Ballenpressen o. dgl. handeln. Bei den vorliegenden Erläuterungen steht die als Mähdrescher ausgestaltete Erntemaschine im Vordergrund.

Regelmäßig kann die in Rede stehende landwirtschaftliche Erntemaschine auf das Ernten von unterschiedlichen Fruchtarten angepasst werden, indem sie mit entsprechend unterschiedlichen Erntevorsätzen ausgestattet wird. Im Falle eines Mähdreschers weist der Erntevorsatz, also das Schneidwerk, zumindest eine Haspel, einen Schneidtisch, einen am Schneidtisch angeordneten Messerbalken sowie eine Einzugsschnecke, die geschnittenes Erntegut einem Schrägförderer der Erntemaschine zuführt, auf. Zumindest einem Teil dieser Komponenten sind Antriebe zugeordnet, mit denen sich entsprechende Schneidwerksparameter wie beispielsweise "Messerbalkenhöhe", "Schnittwinkel", "Schneidtischlänge", "Haspelposition", "Drehzahl Einzugsschnecke", "Drehzahl Haspel" oder "Schnittfrequenz" einstellen lassen.

Im Erntebetrieb führt die Haspel das Erntegut über den Messerbalken, an dem das Erntegut geschnitten wird. Das geschnittene Erntegut landet auf dem Schneidtisch, von wo es von einer Einzugsschnecke zum Schrägförderer hin transportiert wird. In einem mittleren Bereich der Einzugsschnecke wird das geschnittene Erntegut an den Schrägförderer übergeben. Hierfür sind jedenfalls im mittleren Bereich der Einzugsschnecke Einzugsfinger vorgesehen, die gesteuert aus der Einzugsschnecke herausfahren, um das geschnittene Erntegut aufzunehmen und anschließend dem Schrägförderer zuzuleiten. Eine solche Anordnung ist beispielsweise in der DE 78 26 143 U1 beschrieben. Hier ist bezogen auf die Walzendrehung der Ausfahrwinkel einstellbar, in dem die Einzugsfinger aus der Einzugsschnecke ausfahren. Dadurch ergibt sich der weitere, einstellbare Schneidwerksparameter "Ausfahrwinkel Einzugsfinger".

Der optimalen Einstellung der Schneidwerksparameter kommt nicht nur für das Schneiden und Aufnehmen, sondern auch für alle nachgelagerten Prozesse große Bedeutung zu. Beim Mähdrescher handelt es sich bei diesen nachgelagerten Prozessen u. a. um das Dreschen, das Abscheiden und das Reinigen. Es gibt nun eine ganze Reihe von Kriterien, anhand derer die Güte der Funktion des Schneidwerks beurteilt werden kann. Zunächst einmal geht es darum, am Schneidwerk selbst möglichst geringe Verluste zu erzeugen. Solche unmittelbar am Schneidwerk entstehende Verluste sind beispielsweise "Aufnahmeverluste", "Schnittährenverluste", "Spritzkörnerverluste" o. dgl.. Weiter beeinflussen die jeweils eingestellten Schneidwerksparameter die oben angesprochenen, nachgelagerten Prozesse, beim Mähdrescher also insbesondere das Dreschen, das Abscheiden und das Reinigen. Allein schon aus der Anzahl der Schneidwerksparameter ergibt sich, dass eine optimale Einstellung der Schneidwerksparameter eine Aufgabe von hoher Komplexität ist.

Bei der bekannten landwirtschaftlichen Erntemaschine (DE 10 2008 032 191 A1), von der die Erfindung ausgeht, ist ein Fahrerassistenzsystem zur Ansteuerung u.a. des Schneidwerks vorgesehen. Das Fahrerassistenzsystem sorgt für einen gleichmäßigen Erntegutstrom, indem es verschiedene Schneidwerksparameter basierend auf den Daten eines Gutstromsensors ermittelt. Diese Optimierung ist also starr auf die am Schneidwerk selbst herrschenden Zusammenhänge gerichtet. Eine ähnlich fest eingerichtete Optimierung ist in der WO 2014/093814 A1 offenbart, die einen Feldhäcksler betrifft. Andere gattungsgemäße Erntemaschinen sind aus EP 2 837 279 A2 und EP 2 687 923 A2 bekannt.

Ausgehend von dem Stand der Technik besteht die Aufgabe der Erfindung darin, die aus dem Stand der Technik bekannte Erntemaschine mit Fahrerassistenzsystem so weiter zu entwickeln und zu verbessern, dass eine umfassende und vorteilhafte Regelung des Schneidwerks bei besonders geringer Beanspruchung des Fahrers möglich ist.

Das obige Problem wird bei einer Erntemaschine mit den Merkmalen des Oberbegriffs von Anspruch 1 durch die Merkmale des kennzeichnenden Teils von Anspruch 1 gelöst.

Wesentlich für die Erfindung ist, dass das Schneidwerk zusammen mit dem Fahrerassistenzsystem einen Schneidwerksautomaten bildet. Dies bedeutet, dass das Fahrerassistenzsystem mit seinem Speicher zum Hinterlegen von Daten und seiner Rechenvorrichtung dazu eingerichtet ist, einzelne Maschinenparameter des Schneidwerks autonom zu ermitteln und dem Schneidwerk vorzugeben. Solche Maschinenparameter werden vorliegend als "Schneidwerksparameter" bezeichnet. Die Basis für die Ermittlung der Schneidwerksparameter bildet eine benutzerseitige Auswahl von Ernteprozessstrategien, die in dem Speicher des Fahrerassistenzsystems abgelegt sind.

Mit der vorschlagsgemäßen Lösung kann durch eine einmalige Auswahl der aktiven Ernteprozessstrategie durch den Fahrer eine Art und Weise der Ansteuerung des Schneidwerks vorgegeben werden. Für die Ermittlung der Schneidwerksparameter im engeren Sinne ist eine weitere Eingabe vom Fahrer nicht erforderlich. Der Fahrer hat aber die Möglichkeit, die gewählte Ernteprozessstrategie auf Wunsch zu ändern, so dass daraufhin weiter eine autonome Ansteuerung stattfindet, jedoch dann ggf. mit einer anderen Priorisierung. Die vorschlagsgemäße Realisierung eines Schneidwerksautomaten, der auf der Basis ganz unterschiedlicher Ernteprozessstrategien arbeiten kann, führt zu bislang unbekannten Einflussmöglichkeiten durch den Benutzer, ohne die Benutzungskomplexität zu erhöhen.

Erfindungsgemäß ist in dem Speicher des Fahrerassistenzsystems ein funktionales Systemmodell für zumindest einen Teil der Erntemaschine hinterlegt, das die Basis für die autonome Ermittlung des mindestens einen Schneidwerksparameters bildet. Der Begriff "funktionales Systemmodell" bedeutet, dass zumindest ein Teil der funktionalen Zusammenhänge innerhalb der Erntemaschine von dem Systemmodell abgebildet werden. Beispiele hierfür werden weiter unten gegeben.

Bei der weiter bevorzugten Ausgestaltung gemäß Anspruch 5 ist es so, dass die Rechenvorrichtung das Systemmodell im laufenden Erntebetrieb auf den aktuellen Ernteprozesszustand abgleicht. Die Überlegung besteht hier darin, das der autonomen Ermittlung der Schneidwerksparameter zugrundeliegende Systemmodell auf die tatsächlichen Gegebenheiten anzupassen.

Vorzugsweise werden die Schneidwerksparameter während des Erntebetriebs vorzugsweise zyklisch ermittelt. Der Begriff "zyklisch" ist vorliegend weit zu verstehen und bedeutet hier eine fortlaufende Ermittlung mit konstanter, aber auch mit sich verändernder Zykluszeit. Eine solche zyklische Ermittlung des mindestens einen Schneidwerksparameters führt zu einer guten Reaktionszeit der Erntemaschine auf Änderungen im Ernteprozesszustand. Entsprechend ist es in diesem Zusammenhang vorteilhaft, auch das Systemmodell, wie in Anspruch 5 vorgeschlagen, zyklisch auf den aktuellen Ernteprozesszustand abzugleichen. Die Zykluszeiten sind hinreichend kurz einzustellen, um eine oben angesprochene, vorteilhafte Reaktionszeit zu erzielen.

Vorzugsweise gleicht die Rechenvorrichtung das Systemmodell in einem rekursiven Verfahren auf den jeweils aktuellen Ernteprozesszustand ab, so dass sich das Systemmodell schrittweise an die tatsächlichen Gegebenheiten annähert. Unter dem Ernteprozesszustand sind alle Zustandsgrößen zusammengefasst, die in irgendeiner Weise mit dem Ernteprozess im Zusammenhang stehen. Dazu gehören Feldbestandsinformationen und/oder Ernteprozessparameter und/oder Schneidwerksparameter und/oder Umgebungsinformationen (Anspruch 6).

Bei der besonders bevorzugten Ausgestaltung gemäß Anspruch 7 ist eine Sensoranordnung zur Erfassung zumindest eines Teils des Ernteprozesszustands vorgesehen. Damit lässt sich insbesondere der oben angesprochene, zyklische Abgleich des Systemmodells besonders einfach umsetzen.

Bei der weiter bevorzugten Ausgestaltung gemäß Anspruch 8 lässt sich zumindest ein Teil des Ernteprozesszustands über eine Ein-/Ausgabevorrichtung eingeben. Damit lassen sich Sensorinformationen verifizieren oder sensorisch schwer erfassbare Zustandsgrößen ermitteln.

Bei der weiter bevorzugten Ausgestaltung gemäß Anspruch 9 ist in dem Speicher des Fahrerassistenzsystems mindestens ein Initialmodell hinterlegt, das insbesondere bei dem oben angesprochenen, fortlaufenden Abgleich des Systemmodells als Anfangswert dienen kann. Bei geeigneter Auswahl des Initialmodells lässt sich das Systemmodell in nur wenigen Abgleichzyklen auf eine gute Übereinstimmung mit den tatsächlichen Gegebenheiten bringen.

Zur Abbildung der funktionalen Zusammenhänge mittels des Systemmodells ist es vorzugsweise gemäß Anspruch 12 vorgesehen, dass mindestens einem Ernteprozessparameter mindestens ein Kennlinienfeld zugeordnet ist, wobei der Ernteprozessparameter die Ausgangsgröße des jeweiligen Kennlinienfeldes ist. Mittels eines obigen Kennlinienfeldes lassen sich auch komplexe funktionale Zusammenhänge mit geringem rechnerischen Aufwand abbilden. Insbesondere lässt sich der oben angesprochene, insbesondere rekursive Abgleich des Systemmodells mit vergleichsweise geringem Rechenaufwand umsetzen.

Ein obiges Kennlinienfeld bildet hier und vorzugsweise ganz allgemein die Abhängigkeit einer Ausgangsgröße von mindestens einer Eingangsgröße, insbesondere von zwei oder mehreren Eingangsgrößen, ab.

Im Sinne des oben angesprochenen Abgleichs des Systemmodells mit dem tatsächlichen Ernteprozesszustand ist es gemäß Anspruch 15 vorgesehen, dass die Rechenvorrichtung das mindestens eine Kennlinienfeld im laufenden Erntebetrieb, vorzugsweise zyklisch, auf den tatsächlichen Ernteprozesszustand abgleicht. Für die Umsetzung eines solchen Abgleichs ist es vorzugsweise vorgesehen, dass mehrere Punkte innerhalb des Kennlinienfeldes mittels einer Sensoranordnung nachgemessen werden. Eine Abweichung der gemessenen Punkte von den dazugehörigen Punkten des Systemmodells führt zu einer entsprechenden Anpassung des mindestens einen Kennlinienfeldes.

Für die Umsetzung der jeweils ausgewählten Ernteprozessstrategie auf der Basis des Systemmodells ist es gemäß Anspruch 16 vorgesehen, mindestens eine Umsetzungsvorschrift in dem Speicher zu hinterlegen. Ein Beispiel für eine solche Umsetzungsvorschrift ist die Ermittlung des mindestens einen Schneidwerksparameters in einem reinen Steuervorgang. Im einfachsten Fall arbeitet die Rechenvorrichtung zur Ermittlung des mindestens einen Schneidwerksparameters als Kennfeldsteuerung basierend auf dem oben angesprochenen, mindestens einen Kennlinienfeld. Im Zuge der Ermittlung des mindestens einen Schneidwerksparameters kann auf aufwendige Regelungsprozesse mit entsprechend regelungstechnischer Rückkopplung verzichtet werden.

Eine weitere bevorzugt zur Anwendung kommende Umsetzungsvorschrift besteht gemäß Anspruch 20 darin, dass zur gleichzeitigen Umsetzung von miteinander konkurrierenden Ernteprozessstrategien eine Mehrzieloptimierung zur Anwendung kommt.

Schließlich besteht eine weiter bevorzugte Umsetzungsvorschrift gemäß Anspruch 20 in der Definition von Prämissen, auf deren Basis die Rechenvorrichtung eine Priorisierung zwischen verschiedenen Aspekten vornimmt. Speziell im Rahmen der Mehrzieloptimierung ermöglicht die Definition von Prämissen eine effektive Ermittlung von Schneidwerksparametern.

Weitere bevorzugte Umsetzungsvorschriften betreffend die Einstellung oder Optimierung einzelner, bevorzugter Ernteprozessparameter sind Gegenstand der Ansprüche 21 bis 23.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine Seitenansicht einer vorschlagsgemäßen Erntemaschine,
- Fig. 2: eine schematische Darstellung eines Fahrerassistenzsystems einer vorschlagsgemäßen Erntemaschine,
- Fig.3: ein Kennlinienfeld mit der Ausgangsgröße "Abscheideverluste" und mit den Eingangsgrößen "Ausfahrwinkel Einzugsfinger" und "Schneidtischlänge" und
- Fig. 4: ein Kennlinienfeld mit der Ausgangsgröße "Reinigungsverluste" und mit den Eingangsgrößen "Ausfahrwinkel Einzugsfinger" und "Schneidtischlänge".

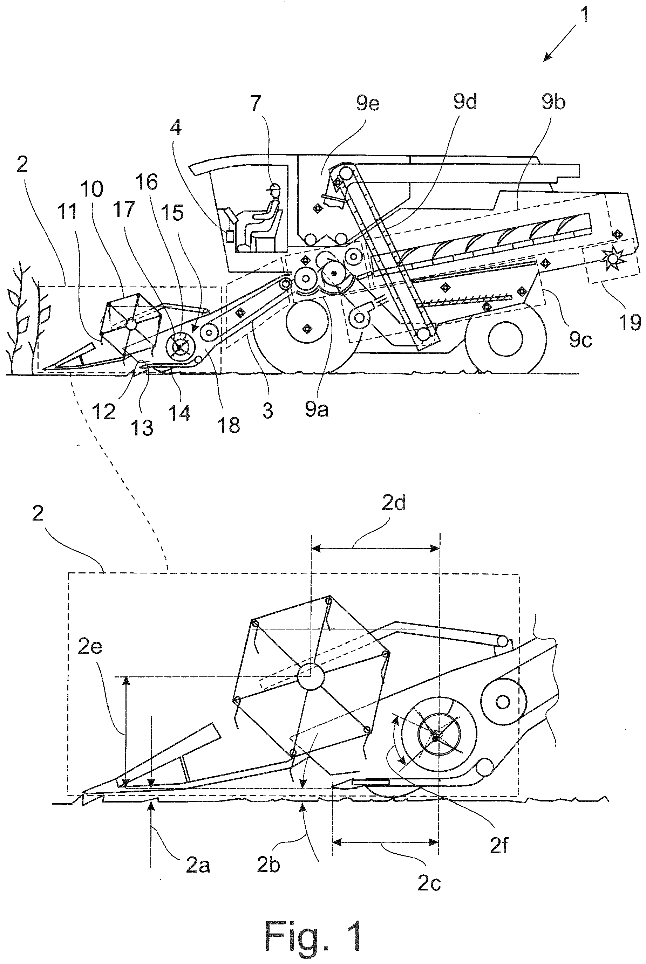

Eine vorschlagsgemäße landwirtschaftliche Erntemaschine 1 weist ein als Erntevorsatz ausgebildetes Schneidwerk 2 zum Schneiden und Aufnehmen von Erntegut auf. Das Schneidwerk 2 ist vorzugsweise austauschbar gegen ein anderes Schneidwerk 2, so dass die Erntemaschine 1 auf das Ernten unterschiedlicher Fruchtarten angepasst werden kann. Unter dem Erntegut ist dabei das gesamte vom Feldbestand über das Schneidwerk 2 aufgenommene Material zu verstehen. Wie in Fig. 1 zu erkennen ist, wird ein Feldbestand durch das Schneidwerk 2 gemäht und das somit gewonnene Erntegut einem Schrägförderer 3 zugeführt.

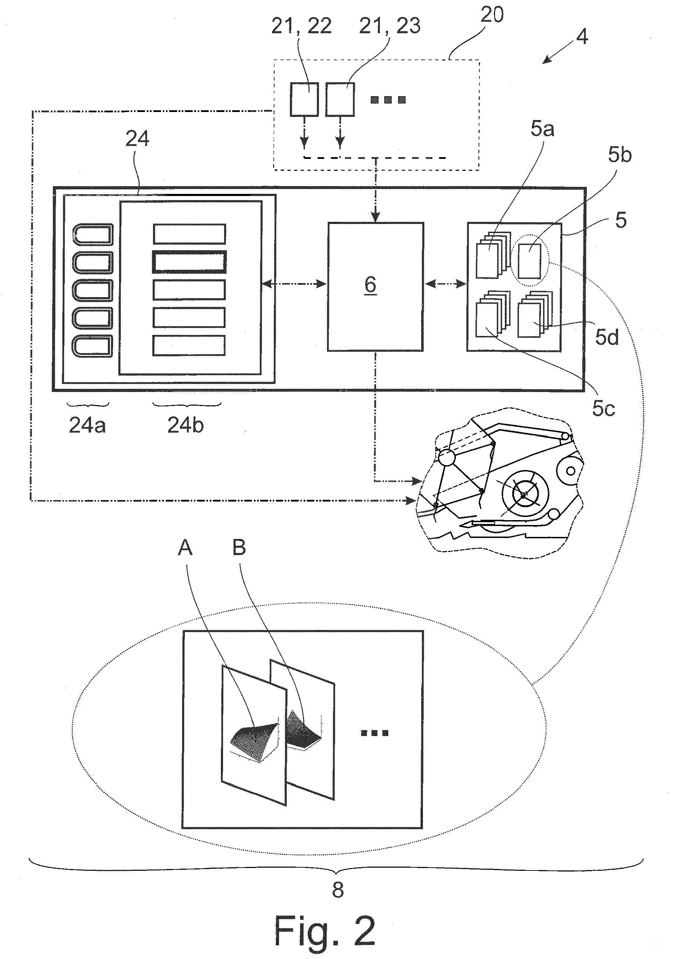

Die vorschlagsgemäße Erntemaschine 1 weist ferner ein Fahrerassistenzsystem 4 zur Ansteuerung des Schneidwerks 2 auf. Dieses Fahrerassistenzsystem 4 umfasst einen Speicher 5 zum Hinterlegen von Daten - also einen Speicher im informationstechnischen Sinne - und eine Rechenvorrichtung 6 zur Verarbeitung der in dem Speicher 5 hinterlegten Daten. Grundsätzlich ist das Fahrerassistenzsystem 4 dazu eingerichtet, einen Fahrer 7 der Erntemaschine 1 bei der Bedienung der Erntemaschine zu unterstützen. Das Fahrerassistenzsystem 4 mit dem Speicher 5 und der Rechenvorrichtung 6 ist schematisch in Fig. 2 gezeigt.

Wesentlich ist nun, dass das Schneidwerk 2 zusammen mit dem Fahrerassistenzsystem 4 einen Schneidwerksautomaten 8 bildet. Dies ist vorschlagsgemäß dadurch realisiert, dass im Speicher 5 eine Mehrzahl auswählbarer Ernteprozessstrategien 5a hinterlegt sind und dass die Rechenvorrichtung 6 dazu eingerichtet ist, zur Umsetzung der ausgewählten Ernteprozessstrategie 5a bzw. der Ernteprozessstrategien 5a mindestens einen Maschinenparameter für das Schneidwerk 2 autonom zu ermitteln und dem Schneidwerk 2 vorzugeben. Solche Maschinenparameter für das Schneidwerk 2 werden vorliegend als "Schneidwerksparameter" bezeichnet. Auf diese Weise wird ein obiger Schneidwerksautomat 8 bereitgestellt, welcher alle für die Arbeit des Schneidwerks 2 relevanten Größen umfassend untereinander koordiniert regelt. Es wird also insbesondere vermieden, dass von unterschiedlicher Seite konkurrierende und sich ggf. gegenseitig aushebelnde Ansteuerungen erfolgen. Vielmehr erfolgt die Ansteuerung aller relevanten Parameter "aus einer Hand". Ebenso kann der Fahrer 7 ein gewünschtes qualitatives Ergebnis vorgeben und braucht kein eigenes Expertenwissen zu den für dieses Ergebnis erforderlichen detaillierten Einzelheiten.

Es handelt sich bei der Ermittlung der Schneidwerksparameter um eine autonome Ermittlung insoweit, dass prinzipiell die Ernteprozessstrategie 5a durch die Rechenvorrichtung 6 umgesetzt wird, ohne dass bei der Ermittlung der Schneidwerksparameter im engeren Sinne ein Eingreifen des Fahrers 7 oder eine Rückfrage an den Fahrer nötig ist. Ein solches Eingreifen des Fahrers 7 ist demnach weiterhin prinzipiell möglich, aber nicht erforderlich. Dabei unterscheiden sich die hinterlegten Ernteprozessstrategien 5a in der Zielvorgabe der Einstellung oder der Optimierung von Ernteprozessparametern, wie noch erläutert wird.

Es darf darauf hingewiesen werden, dass das Fahrerassistenzsystem 4 grundsätzlich zentral ausgestaltet sein kann. Es dient insoweit der Ansteuerung nicht nur des Schneidwerks 2, sondern auch nachgelagerter Arbeitsorgane. Grundsätzlich ist es aber denkbar, dass das Fahrerassistenzsystem 4 dezentral strukturiert ist und aus einer Anzahl einzelner Steuersysteme zusammengesetzt ist. Dann kann es beispielsweise vorgesehen sein, dass zumindest ein Teil der Arbeitsorgane der Erntemaschine 1 jeweils ein zugeordnetes, dezentrales Steuersystem aufweisen.

Es wurde schon darauf hingewiesen, dass es sich bei der Erntemaschine 1 um jedwede Erntemaschine 1 handeln kann, der ein als Erntevorsatz ausgebildetes Schneidwerk 2 zugeordnet ist. Bei dem dargestellten und insoweit bevorzugten Ausführungsbeispiel ist die Erntemaschine 1 als Mähdrescher ausgestaltet. Entsprechend ist dem Schneidwerk 2 ein Dreschwerk 9a zum Dreschen von aufgenommenem Erntegut zu Korngut nachgeschaltet. Das Dreschwerk 9a ist in an sich üblicher Weise mit einer Dreschtrommel ausgestattet, die mit einem Dreschkorb zusammenwirkt. Dem Dreschwerk 9a ist eine Abscheideanordnung 9b prozesstechnisch nachgelagert. Der dem Dreschwerk 9a zugeführte Erntegutstrom wird also im Anschluss - ohne das bereits hier gewonnene Korngut - der Abscheideanordnung 9b zugeführt. In der Abscheideanordnung 9b wird das Erntegut mit dem in ihm verbliebenen Kornanteil so bewegt, z. B. geschüttelt, dass auch das verbliebene Korngut möglichst aus dem Stroh und dem sonstigen Erntegut herausgetrennt wird. Das im Dreschwerk 9a und der Abscheideanordnung 9b gewonnene Korngut wird dann einer Reinigungsanordnung 9c zugeführt. In der Reinigungsanordnung 9c, welche regelmäßig mehrstufig ist, werden dann noch bis hierher im Korngut mitgeführte Nichtkornbestandteile, z. B. Spreu und Strohteile, sowie unausgedroschenes Material, wie etwa Ähren, Spitzen oder Grannen, von dem Korngut getrennt. Anschließend gelangt das gereinigte Korngut über eine Transportanordnung 9, z. B. einen Kornelevator 9d, in einen Korntank 9e. Das ausgedroschene Stroh - also das verbliebene Erntegut in der Abscheideanordnung 9b - wird von der Erntemaschine abgelegt, z. B. als Schwad entlang der Fahrspur.

Alternativ kann die Erntemaschine 1 auch als Feldhäcksler ausgestaltet sein. Dann ist dem Schneidwerk 2 eine Vorpresswalzenanordnung und ein der Vorpresswalzenanordnung nachgeschaltetes Häckselwerk nachgeschaltet. Eine Abscheidung ist beim Feldhäcksler nicht erforderlich, da das aufgenommene Erntegut lediglich mittels des Häckselwerks zerkleinert wird. Die folgenden Ausführungen sind in erster Linie auf die dargestellte, als Mähdrescher ausgestaltete Erntemaschine 1 gerichtet. Alle diesbezüglichen, das Schneidwerk 2 betreffenden Ausführungen gelten für eine als Feldhäcksler ausgestaltete Erntemaschine 1 jedoch entsprechend.

Das Schneidwerk 2 der dargestellten Erntemaschine 1 weist eine quer zu der Fahrtrichtung der Erntemaschine 1 verlaufende Haspel 10 auf, die über daran angeordnete Zinken 11 bereits auf das noch ungeschnittene Erntegut einwirkt. Die Haspel 10 hat in erster Linie die Aufgabe, das Erntegut einem Messerbalken 12, der ein bewegliches Messer 13 aufweist, zuzuführen. Das Messer 13 oszilliert mit einer Schnittfrequenz, so dass das Erntegut geschnitten wird und auf einen Schneidtisch 14 fällt, an dessen Vorderseite sich der Messerbalken 12 befindet. Anschließend wird das Erntegut, ggf. unter weiterer Einwirkung durch die Haspel 10, mittels einer Einzugsschnecke 15 dem Schrägförderer 3 zugeführt. Hierfür ist die Einzugsschnecke 15 mit Blechen 16 ausgestattet, die beidseits eines mittleren Bereichs der Einzugsschnecke 15, der auch als "Einzugsbereich" bezeichnet wird, angeordnet sind. Dadurch wird das geschnittene Erntegut zunächst zum Einzugsbereich der Einzugsschnecke 15 und von dort zum Schrägförderer 3 transportiert. Im Einzugsbereich sind der Einzugsschnecke 15 mehrere Einzugsfinger 17 zugeordnet, die bezogen auf die Walzendrehung jeweils zyklisch in einem Ausfahrwinkel der Einzugsschnecke 15 aus der Einzugsschnecke 15 ausfahren und in einem Einfahrwinkel der Einzugsschnecke 15 in die Einzugsschnecke 15 einfahren. Das Einfahren der Einzugsfinger 17 ist erforderlich, um zu vermeiden, dass eingezogenes Erntegut vollständig um die Einzugsschnecke 15 herumläuft, ohne dem Schrägförderer 3 übergeben zu werden.

Alle obigen Komponenten des Schneidwerks 2 sind an einem Trägerrahmen 18 angeordnet, der sich aus mehreren Rahmenteilen zusammensetzt.

Je nach Ausstattung erlaubt das Schneidwerk 2 die Einstellung verschiedener Schneidwerksparameter mittels entsprechender, hier nicht dargestellter Antriebe, die sich über das Fahrerassistenzsystem 4 ansteuern lassen.

Dem Messerbalken 12 beispielsweise sind der Schneidwerksparameter 2a "Messerbalkenhöhe" und der Schneidwerksparameter 2b "Schnittwinkel" zugeordnet, wie in Fig. 1 gezeigt ist. Dem in seiner Länge veränderlichen Schneidtisch 14 ist der Schneidwerksparameter 2c "Schneidtischlänge" zugeordnet. Der Haspel 10 sind der Schneidwerksparameter 2d "Haspelposition (horizontal)" und der Schneidwerksparameter 2e "Haspelposition (vertikal)" zugeordnet. Weiter bieten die Schneidwerksparameter "Drehzahl Einzugsschnecke", "Drehzahl Haspel" und "Schnittfrequenz" weitere Schneidwerksparameter, die sich vorzugsweise mittels des Fahrerassistenzsystems 4 einstellen lassen. Schließlich ergibt sich aus der Steuerbarkeit der obigen Einzugsfinger 17 der Schneidwerksparameter 1f "Ausfahrwinkel Einzugsfinger", der definiert, in welcher Winkellage bezogen auf die Drehung der Einzugsschnecke 15 die Einzugsfinger 17 aus der Einzugsschnecke 15 ausfahren.

Die genannten Schneidwerksparameter haben nicht nur einen Einfluss auf die Funktion des Schneidwerks 2 im engeren Sinne, sondern auch auf die Funktion der nachgelagerten Arbeitsorgane, hier auf die Funktion des Dreschwerks 9a, der Abscheideanordnung 9b und der Reinigungsanordnung 9c. Ggf. ist auch eine Verteilanordnung 19 zur Verteilung der Nichtkornbestandteile auf dem Feld zu berücksichtigen, die ebenfalls durch die Schneidwerksparameter des Schneidwerks 2 beeinflussbar ist. Beispielhafte Zusammenhänge werden weiter unten erläutert.

Hier ist in dem Speicher 5 des Fahrerassistenzsystems 4 ein funktionales Systemmodell 5b für zumindest einen Teil der Erntemaschine 1 hinterlegt, wobei die Rechenvorrichtung 6 die oben angesprochene, autonome Ermittlung des mindestens einen Schneidwerksparameters 2a-f basierend auf dem Systemmodell 5b vornimmt.

Bei dem funktionalen Systemmodell 5b handelt es sich um ein rechnerisches Modell zur Abbildung funktionaler Zusammenhänge innerhalb der Erntemaschine 1. Beispiele für solche funktionalen Zusammenhänge werden weiter unten erläutert.

Das Systemmodell 5b wird von der Rechenvorrichtung 6 vorzugsweise im laufenden Erntebetrieb auf den aktuellen Ernteprozesszustand abgeglichen. Dies bedeutet, dass die Rechenvorrichtung 6 überprüft, ob die in dem Systemmodell 5b abgebildeten funktionalen Zusammenhänge mit dem tatsächlichen Ernteprozesszustand übereinstimmen. Sofern sich bei dieser Überprüfung Abweichungen ergeben, nimmt die Rechenvorrichtung 6 eine entsprechende Änderung des Systemmodells 5b vor. Dieser Abgleich erfolgt in besonders bevorzugter Ausgestaltung zyklisch, wobei im Hinblick auf das weite Verständnis des Begriffs "zyklisch" auf den allgemeinen Teil der Beschreibung verwiesen werden darf.

In einer bevorzugten Ausgestaltung gleicht die Rechenvorrichtung 6 das Systemmodell 5b in einem rekursiven Verfahren auf den tatsächlichen Ernteprozesszustand ab und legt das Systemmodell 5b in dem Speicher 5 ab. Dies wird dadurch bewerkstelligt, dass das vor dem Abgleich im Speicher 5 abgelegte Systemmodell 5b bei dem Abgleich berücksichtigt wird. So ist ein schrittweiser Abgleich des Systemmodells 5b vorgesehen.

Im Sinne kurzer Reaktionszeiten der Erntemaschine 1 auf sich verändernde Ernteprozesszustände ist es vorzugsweise vorgesehen, dass die Rechenvorrichtung 6 die Schneidwerksparameter in obigem Sinne zyklisch ermittelt. Auch in diesem Zusammenhang darf auf das weite Verständnis des Begriffs "zyklisch" verwiesen werden.

Wie weiter oben erläutert, umfasst der Begriff "Ernteprozesszustand" alle den Ernteprozess betreffenden Informationen. Dazu gehören Feldbestandsinformationen wie "Bestandsdichte", "Bestandshöhe", "Bestandsfeuchte", "Halmlänge" und "Lageranteil". Ferner gehören dazu der Ernteprozessparameter "Schnittährenverluste" als Maß für das geschnittene, jedoch nicht aufgenommene Erntegut, der Ernteprozessparameter "Spritzkörnerverluste" als Maß für die durch die Wechselwirkung zwischen der Haspel 10 und dem Erntegut verlorenen Körner, der Ernteprozessparameter "Gleichmäßigkeit Querverteilung Erntegutstrom" als Maß für die gleichmäßige Verteilung des Ernteguts über die Breite des Schrägförderers 3, der Ernteprozessparameter "zeitliche Varianz Erntegutstrom" als Maß für die in zeitlicher Hinsicht gleichmäßige Verteilung des Ernteguts entlang der Förderrichtung des Schrägförderers 3, der Ernteprozessparameter "Abscheideverluste" als Maß für die von der Abscheideanordnung 9b auf dem Feld abgelegten Körner, der Ernteprozessparameter "Reinigungsverluste" als Maß für die von der Reinigungsanordnung 9c auf dem Feld abgelegten Körner und der Ernteprozessparameter "Kraftstoffverbrauch" als Maß für den Energieverbrauch des Schneidwerks 2 insgesamt. Schließlich gehören dazu Schneidwerksparameter wie "Messerbalkenhöhe", "Schnittwinkel", "Schneidtischlänge", "Ausfahrwinkel Einzugsfinger", "Haspelposition (horizontal)", "Haspelposition (vertikal)", "Drehzahl Einzugsschnecke", "Drehzahl Haspel" und "Schnittfrequenz" sowie Umgebungsinformationen wie "Umgebungstemperatur" und "Umgebungsfeuchte". All diese dem Ernteprozesszustand zuzurechnenden Informationen lassen sich auf unterschiedliche Art und Weise ermitteln.

Grundsätzlich kann es sich bei einem obigen Ernteprozessparameter auch um den Ernteprozessparameter "Schichthöhe" als ein Maß für den Durchsatz handeln. Hinsichtlich des Begriffs "Schichthöhe" darf darauf hingewiesen werden, dass dieser Begriff weit auszulegen ist und sowohl die Schichthöhe des über den Schrägförderer 3 geförderten Erntegutstroms im engeren Sinne als auch den Durchsatz des über den Schrägförderer 3 geförderten Erntegutstroms umfasst. Insbesondere kann der Begriff "Schichthöhe" vorliegend durch den Begriff "Durchsatz" ersetzt werden.

In einer bevorzugten Ausgestaltung ist eine Sensoranordnung 20 zur Erfassung zumindest eines Teils des Ernteprozesszustands vorgesehen. Vorzugsweise ist die Sensoranordnung 20 mit mehreren Sensoren 21 ausgestattet. Beispielsweise weist die Sensoranordnung 20 einen Gutstromsensor 22 zur Erfassung des Erntegutstroms auf. Der Gutstromsensor 22 kann beispielsweise kamerabasiert ausgestaltet sein und Aufschluss über die Ernteprozessparameter "Gleichmäßigkeit Querverteilung Erntegutstrom" und/oder "zeitliche Varianz Erntegutstrom" geben. Alternativ oder zusätzlich kann die Sensoranordnung 20 einen Bestandssensor 23 zur Erfassung von Feldbestandsinformationen aufweisen.

Alternativ zu der Erfassung des Ernteprozesszustands mittels einer Sensoranordnung 20 kann es auch vorgesehen sein, dass eine Ein-/Ausgabevorrichtung 24 dem Fahrerassistenzsystem 4 zugeordnet ist, wobei zumindest ein Teil des Ernteprozesszustands über die Ein-/Ausgabevorrichtung 24 eingebbar ist. Dabei ist es vorzugsweise so, dass die Rechenvorrichtung 6 Abfragen betreffend den aktuellen Ernteprozesszustand erzeugt und über die Ein-/Ausgabevorrichtung 24 ausgibt. Auf eine solche Abfrage hin kann der Fahrer 7 zumindest einen Teil des Ernteprozesszustands über die Ein-/Ausgabevorrichtung 24 eingeben. Hierfür weist die Ein-/Ausgabevorrichtung 24 entsprechende Eingabeelemente 24a und Ausgabeelemente 24b auf.

Eine obige Abfrage besteht vorzugsweise darin, wie hoch die geschätzte Feldbestandsinformation "Lageranteil", also der Anteil an Lagergetreide im Feldbestand, ist. Im einfachsten Falle wird dem Fahrer 7 eine Auswahl aus vorbestimmten Antworten bereitgestellt.

Wie oben erläutert, wird das Systemmodell 5b vorzugsweise zyklisch auf den tatsächlichen Ernteprozesszustand abgeglichen. Als Anfangswert für das Systemmodell 5b ist in dem Speicher 5 mindestens ein Initialmodell 5c hinterlegt, wobei der ersten Ermittlung des mindestens einen Schneidwerkparameters die Rechenvorrichtung 6 die Ermittlung basierend auf dem Initialmodell 5b vornimmt. Die Formulierung "erste Ermittlung" steht für die Situation insbesondere zu Beginn des Erntebetriebs, in der ein Abgleich des Systemmodells 5b noch nicht vorgenommen worden ist.

In besonders bevorzugter Ausgestaltung sind in dem Speicher 5 mindestens zwei Initialmodelle 5c hinterlegt, wobei die Rechenvorrichtung 6 in Abhängigkeit von dem jeweiligen Ernteprozesszustand ein Initialmodell 5c auswählt, auf dem die anschließende Ermittlung der Schneidwerksparameter zunächst basiert.

Die in Rede stehenden, vom Fahrer 7 auswählbaren Ernteprozessstrategien 5a sind jeweils auf verschiedene Zielvorgaben gerichtet. In einer ersten Variante ist mindestens eine Ernteprozessstrategie 5a auf die Zielvorgabe der Einstellung oder der Optimierung mindestens eines Ernteprozessparameters wie "Schnittährenverluste", "Spritzkörnerverluste", "Gleichmäßigkeit Querverteilung Erntegutstrom", "zeitliche Varianz Erntegutstrom", "Abscheideverluste", "Reinigungsverluste" oder "Kraftstoffverbrauch" o. dgl. gerichtet. Die Umsetzung der Ernteprozessstrategie 5a soll dabei jeweils durch eine entsprechende Vorgabe von Schneidwerksparametern, hier und vorzugsweise von Schneidwerksparametern wie "Schneidtischlänge" oder "Ausfahrwinkel Einzugsfinger" erfolgen.

Erfindungsgemäß bildet das Systemmodell 5b zumindest einen Teil der funktionalen Zusammenhänge zwischen einem Ernteprozessparameter und mindestens einem Schneidwerksparameter ab.

Zur Abbildung der funktionalen Zusammenhänge ist mindestens einem Ernteprozessparameter mindestens ein Kennlinienfeld A, B zugeordnet, wobei dieser Ernteprozessparameter hier als Ausgangsgröße des mindestens einen Kennlinienfeldes A, B definiert ist. Bei der Eingangsgröße des mindestens einen Kennlinienfeldes A, B handelt es sich vorzugsweise um Schneidwerksparameter, insbesondere um die Schneidwerksparameter "Schneidtischlänge" und "Ausfahrwinkel Einzugsfinger".

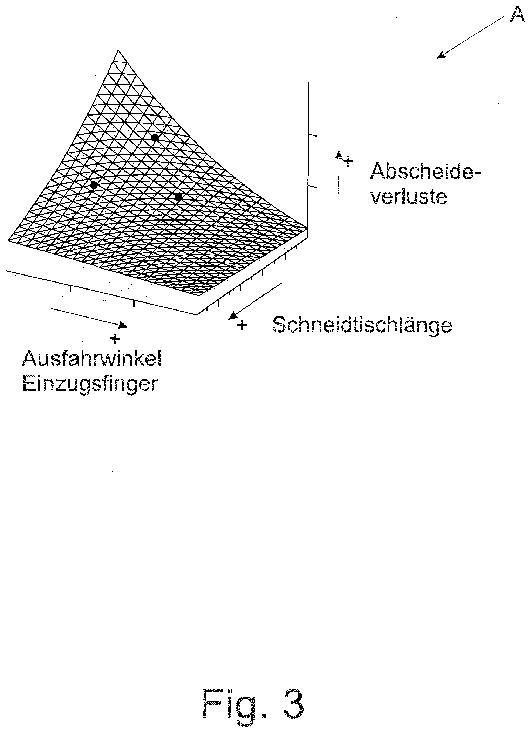

Fig. 3 zeigt das Kennlinienfeld A zu dem funktionalen Zusammenhang zwischen der Ausgangsgröße "Abscheideverluste" und den Eingangsgrößen "Schneidtischlänge" und "Ausfahrwinkel Einzugsfinger". Hieraus ergibt sich, dass die Abscheideverluste zumindest in erster Näherung umso geringer sind, je größer die Schneidtischlänge ist. Es lässt sich dem Kennlinienfeld A ferner entnehmen, dass die Abscheideverluste umso geringer sind, je höher der Ausfahrwinkel der Einzugsfinger 17 ist, also je später die Einzugsfinger ausgefahren werden. Diese Zusammenhänge ergeben sich daraus, dass die Abscheideverluste in der Praxis umso geringer sind, je kleiner die zeitliche Varianz des Erntegutstroms ist. Diese zeitliche Varianz lässt sich durch eine Vergrößerung der Schneidtischlänge und durch eine Vergrößerung des Ausfahrwinkels für die Einzugsfinger 17 reduzieren.

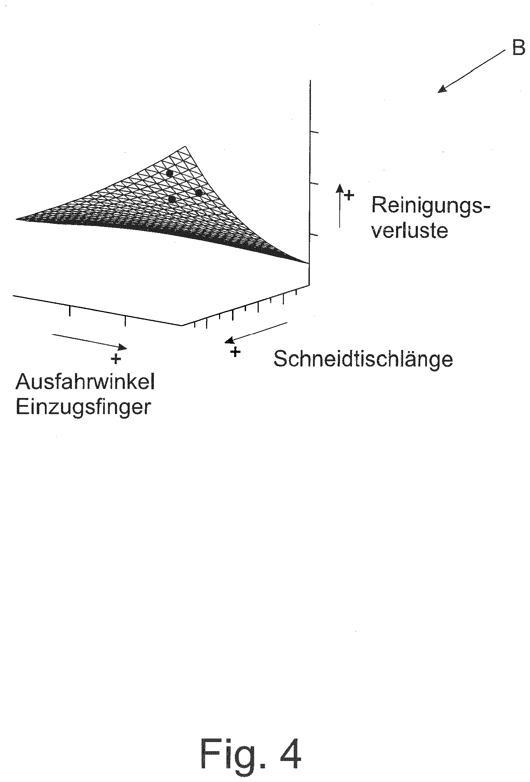

Fig. 4 zeigt das Kennlinienfeld B zu dem funktionalen Zusammenhang zwischen der Ausgangsgröße "Reinigungsverluste" und den Eingangsgrößen "Schneidtischlänge" und "Ausfahrwinkel Einzugsfinger". Hieraus ergibt sich, dass die Reinigungsverluste zumindest in erster Näherung umso geringer sind, je kleiner die Schneidtischlänge und je kleiner der Ausfahrwinkel der Einzugsfinger 17 ist. Dies ergibt sich daraus, dass in der Praxis die Reinigungsverluste umso geringer sind, je gleichmäßiger das Erntegut über die Breite des Schrägförderers 3 verteilt ist. Eine solche gleichmäßige Verteilung wird durch eine hohe Schneidtischlänge und einen kleinen Ausfahrwinkel der Einzugsfinger 17, also ein frühes Ausfahren der Einzugsfinger 17 erreicht.

Grundsätzlich kann es vorgesehen sein, dass die Rechenvorrichtung 6 der Ermittlung des mindestens einen Ernteprozessparameters stets ein und dasselbe Kennlinienfeld A, B, ggf. mit einer auf den obigen Abgleich zurückgehenden Modifizierung, zugrunde legt. Vorzugsweise ist es jedoch so, dass die Rechenvorrichtung 6 mindestens ein Kennlinienfeld A, B in Abhängigkeit von dem aktuellen Ernteprozesszustand auswählt und der Ermittlung des mindestens einen Schneidwerksparameters zugrunde legt. Damit kann beispielsweise mit einer geeigneten Wahl des Kennlinienfelds A, B auf eine Änderung von Ernteprozesszuständen, beispielsweise auf eine Änderung von einer Bestandsfeuchte o. dgl. reagiert werden.

Der oben erläuterte Abgleich des Systemmodells 5b auf den aktuellen Ernteprozesszustand erfolgt für den Fall des Systemmodells 5b mit mindestens einem Kennlinienfeld A, B, vorzugsweise dadurch, dass die Rechenvorrichtung 6 das mindestens eine Kennlinienfeld A, B im laufenden Erntebetrieb, insbesondere zyklisch, auf den Ernteprozesszustand abgleicht. Als Startwert ist in Anlehnung an das Initialmodell 5c in dem Speicher 5 mindestens ein Initialkennlinienfeld hinterlegt, wobei bei der ersten Ermittlung des mindestens einen Schneidwerksparameters die Rechenvorrichtung 6 entsprechend die Ermittlung des mindestens einen Schneidwerksparameters basierend auf dem Initialkennlinienfeld 5c vornimmt. In den Fig. 3 und 4 sind jeweils eine Reihe von realen Sensormesswerten zu dem jeweiligen Ernteprozesszustand eingetragen. In dem obigen Abgleich nimmt die Rechenvorrichtung 6 eine Veränderung des jeweiligen Kennlinienfeldes a, b vor, um eine Annäherung des Kennlinienfeldes A, B an die realen Sensormesswerte zu erreichen. Dabei kann beispielsweise das gesamte Kennlinienfeld A, B in Richtung der jeweiligen Ausgangsgröße, in den Fig. 3 und 4 nach oben oder nach unten, verschoben werden. Besonders vorteilhaft ist allerdings, wenn die Annäherung des Kennlinienfeldes A, B so getroffen ist, dass sie auch eine Änderung der Verläufe der jeweiligen Kennlinien mit sich bringt.

Für die Umsetzung der Ernteprozessstrategie 5a mittels der Rechenvorrichtung 6 ist in dem Speicher 5 mindestens eine Umsetzungsvorschrift 5d hinterlegt. Für die Umsetzungsvorschrift 5d sind verschiedene vorteilhafte Varianten denkbar. In einer ersten Variante ist es vorgesehen, dass eine Umsetzungsvorschrift 5d die Ermittlung des mindestens einen Schneidwerksparameters in einem Steuervorgang, und nicht in einem Regelungsvorgang, umsetzt. Dabei arbeitet die Rechenvorrichtung 6 zur Ermittlung des mindestens einen Schneidwerksparameters vorzugsweise als Kennfeldsteuerung. Eine regelungstechnische Rückkopplung ist bei der Ermittlung der Schneidwerksparameter also nicht vorgesehen. Die Reaktion der Rechenvorrichtung 6 auf Änderungen im Ernteprozesszustand ergibt sich allein aus dem oben erläuterten Abgleich des Systemmodells 5b auf den jeweils aktuellen Ernteprozesszustand. Dieses Grundprinzip der Ansteuerung des Schneidwerks 2 führt zu einer Vereinfachung der Ermittlung der Schneidwerksparameter durch den Wegfall der regelungstechnischen Rückkopplung. Dadurch ergibt sich die Möglichkeit, auch komplexe funktionale Zusammenhänge, insbesondere die im Folgenden zu erläuternden konkurrierenden Strategien, mit geringem rechnerischem und zeitlichem Aufwand umzusetzen.

Konkurrierende Strategien können sich beispielsweise dadurch ergeben, dass zumindest eine auswählbare Ernteprozessstrategie 5a mindestens zwei Teilstrategien umfasst, die im Hinblick auf ein und denselben Schneidwerksparameter miteinander konkurrieren. Eine zweite Möglichkeit besteht in diesem Zusammenhang darin, dass mindestens zwei auswählbare Ernteprozessstrategien als solche im Hinblick auf ein und denselben Schneidwerksparameter miteinander konkurrieren. Beispielsweise erfordert die Reduzierung der Abscheideverluste gemäß Fig. 3 eine Erhöhung der Schneidtischlänge, während eine Reduzierung der Reinigungsverluste gemäß Fig. 4 ein Erhöhen der Schneidtischlänge erfordert.

In den obigen Situationen umfasst eine Umsetzungsvorschrift 5d zur Umsetzung der miteinander konkurrierenden Strategien vorzugsweise eine Mehrzieloptimierung, bei der es sich beispielsweise um eine Pareto-Optimierung handeln kann. Eine solche Mehrzieloptimierung lässt sich besonders einfach auf der Basis des Systemmodells 5b, vorzugsweise auf der Basis der obigen Kennlinienfelder A, B und weiter vorzugsweise unter Anwendung der oben genannten Kennfeldsteuerung umsetzen.

Insbesondere bei der Umsetzung der miteinander konkurrierenden Strategien ist es vorzugsweise vorgesehen, dass eine Umsetzungsvorschrift 5d mindestens eine Prämisse umfasst, auf deren Basis die Rechenvorrichtung 6 bei der autonomen Ermittlung des mindestens einen Schneidwerksparameters eine Priorisierung zwischen ausgewählten Ernteprozessstrategien 5a und/oder zwischen Teilstrategien einer ausgewählten Ernteprozessstrategie 5a und/oder zwischen einzustellenden oder zu optimierenden Ernteprozessparametern und/oder zwischen vorzugebenden Schneidwerksparametern vornimmt.

Gemäß der obigen Erläuterungen zu den Kennlinienfeldern A, B ist es nun im Einzelnen so, dass für die Ernteprozessstrategie der Einstellung oder Optimierung des Ernteprozessparameters "Abscheideverluste" eine Umsetzungsvorschrift 5d darin besteht, dass die Rechenvorrichtung 6 auf ein Ansteigen des Ernteprozessparameters "Abscheideverluste" basierend auf dem Systemmodell 5b ein Ansteigen des Schneidwerksparameters "Ausfahrwinkel Einzugsfinger" und/oder ein Ansteigen des Schneidwerksparameters "Schneidtischlänge" vorgibt.

Weiter vorzugsweise ist es so, dass für die Ernteprozessstrategie der Einstellung oder Optimierung des Ernteprozessparameters "Reinigungsverluste" eine Umsetzungsvorschrift 5d darin besteht, dass die Rechenvorrichtung 6 auf ein Ansteigen des Ernteprozessparameters "Reinigungsverluste" basierend auf dem Systemmodell 5b ein Absinken des Schneidwerksparameters "Ausfahrwinkel Einzugsfinger" und/oder ein Absinken des Schneidwerksparameters "Schneidtischlänge" vorgibt.

Schließlich ist es vorzugsweise so, dass für die Ernteprozessstrategie der Einstellung oder Optimierung des Ernteprozessparameters "Kraftstoffverbrauch" eine Umsetzungsvorschrift 5d darin besteht, dass die Rechenvorrichtung 6 auf ein Ansteigen des Ernteprozessparameters "zeitliche Varianz Erntegutstrom" basierend auf dem Systemmodell 5b ein Ansteigen des Schneidwerksparameters "Ausfahrwinkel Einzugsfinger" und/oder ein Ansteigen des Schneidwerksparameters "Schneidtischlänge" vorgibt.

Es darf darauf hingewiesen werden, dass weitere Umsetzungsvorschriften 5b denkbar sind, die wiederum auf weiteren Varianten des Systemmodells 5b, insbesondere auf weiteren Kennlinienfeldern, basieren können.

### Bezugszeichenliste

- 1: Erntemaschine
- 2: Schneidwerk
- 3: Schrägförderer
- 4: Fahrerassistenzsystem
- 5: Speicher
- 5a: Ernteprozessstrategie
- 5b: Funktionales Systemmodell
- 5c: Initialmodell
- 5d: Umsetzungsvorschrift
- 6: Rechenvorrichtung
- 7: Fahrer
- 8: Schneidwerksautomat
- 9: Transportanordnung
- 9a: Dreschwerk
- 9b: Abscheideanordnung
- 9c: Reinigungsanordnung
- 9d: Elevator
- 9e: Korntank
- 10: Haspel
- 11: Zinken
- 12: Messerbalken
- 13: Messer
- 14: Schneidtisch
- 15: Einzugsschnecke
- 16: Blech
- 17: Einzugsfinger
- 18: Trägerrahmen
- 19: Verteilanordnung
- 20: Sensoranordnung
- 21: Sensoren
- 21c: Schneidtischlänge
- 21d: Haspel (horizontal)
- 21e: Haspel (vertikal)
- 21f: Ausfahrwinkel
- 22: Gutstromsensor
- 23: Bestandssensor
- 24: E/A-Vorrichtung
- 24a: Eingabeelement
- 24b: Ausgabeelement
- A, B: Kennlinienfeld

## Patentansprüche

1. Landwirtschaftliche Erntemaschine mit einem als Erntevorsatz ausgebildeten Schneidwerk (2) zum Schneiden und Aufnehmen von Erntegut und mit einem Fahrerassistenzsystem (4) zur Ansteuerung des Schneidwerks (2), wobei das Fahrerassistenzsystem (4) einen Speicher (5) zum Hinterlegen von Daten und eine Rechenvorrichtung (6) zur Verarbeitung der in dem Speicher (5) hinterlegten Daten umfasst,
**dadurch gekennzeichnet,**
**dass** das Schneidwerk (2) zusammen mit dem Fahrerassistenzsystem (4) einen Schneidwerksautomaten (8) bildet, indem im Speicher (5) eine Mehrzahl auswählbarer Ernteprozessstrategien (5a) zur Einstellung oder Optimierung von Ernteprozessparametern hinterlegt sind und indem die Rechenvorrichtung (6) dazu eingerichtet ist, zur Umsetzung der ausgewählten Ernteprozessstrategie (5a) bzw. der ausgewählten Ernteprozessstrategien (5a) mindestens einen Maschinenparameter - Schneidwerksparameter (2a-f) - autonom zu ermitteln und dem Schneidwerk (2) vorzugeben, wobei in dem Speicher (5) ein funktionales Systemmodell (5b) für zumindest einen Teil der Erntemaschine (1) hinterlegt ist und dass die Rechenvorrichtung (6) dazu eingerichtet ist, die autonome Ermittlung des mindestens einen Schneidwerksparameters (2a-f) basierend auf dem Systemmodell (5b) vorzunehmen, wobei das Systemmodell (5b) funktionale Zusammenhänge zwischen einem Ernteparameter und mindestens einem Schneidwerkparameter bildet

2. Erntemaschine nach Anspruch 1, **dadurch gekennzeichnet, dass** die Erntemaschine (1) als Mähdrescher ausgestaltet ist und ein dem Schneidwerk (2) nachgeschaltetes Dreschwerk (9a), eine dem Dreschwerk (9a) nachgeschaltete Abscheideanordnung (9b) und eine der Abscheideanordnung (9b) nachgeschaltete Reinigungsanordnung (9c) aufweist, oder, dass die Erntemaschine (1) als Feldhäcksler ausgestaltet ist und eine dem Schneidwerk (2) nachgeschaltete Vorpresswalzenanordnung und ein der Vorpresswalzenanordnung nachgeschaltetes Häckselwerk aufweist.

3. Erntemaschine nach Anspruch 1 oder 2, **dadurch gekennzeichnet, dass** das Schneidwerk (2) die Komponenten Haspel (10), Messerbalken (13) Schneidtisch (14) und Einzugsschnecke (15) aufweist, und dass die dazugehörigen Schneidwerksparameter "Messerbalkenhöhe", "Schnittwinkel", "Schneidtischlänge", "Haspelposition (horizontal)", "Haspelposition (vertikal)", "Drehzahl Einzugsschnecke", "Drehzahl Haspel", "Schnittfrequenz" mittels des Fahrerassistenzsystems (4) einstellbar sind.

4. Erntemaschine nach einem der vorhergehenden Ansprüche, **dadurch gekennzeichnet, dass** der Einzugsschnecke (15) mehrere Einzugsfinger (17) zugeordnet sind, die bezogen auf die Walzendrehung jeweils zyklisch in einem Ausfahrwinkel (2f) der Einzugsschnecke (15) aus der Einzugsschnecke (15) ausfahren und in einem Einfahrwinkel der Einzugsschnecke in die Einzugsschnecke einfahren und dass zumindest der Schneidwerksparameter (2f) "Ausfahrwinkel" über das Fahrerassistenzsystem (4) einstellbar ist.

5. Erntemaschine nach einem der vorhergehenden Ansprüche, **dadurch gekennzeichnet, dass** die Rechenvorrichtung (6) das Systemmodell (5b) im laufenden Erntebetrieb, insbesondere zyklisch, auf den aktuellen Ernteprozesszustand abgleicht.

6. Erntemaschine nach einem der vorhergehenden Ansprüche, **dadurch gekennzeichnet, dass** der Ernteprozesszustand Feldbestandsinformationen wie "Bestandsdichte", "Bestandshöhe", "Bestandsfeuchte", "Halmlänge", "Lageranteil" und/oder Ernteprozessparameter wie "Schnittährenverluste", "Spritzkörnerverluste", "Gleichmässigkeit Querverteilung Erntegutstrom", "Zeitliche Varianz Erntegutstrom", "Abscheideverluste", "Reinigungsverluste", "Kraftstoffverbrauch" und/oder Schneidwerksparameter wie "Messerbalkenhöhe", "Schnittwinkel", "Schneidtischlänge", "Ausfahrwinkel Einzugsfinger", "Haspelposition (horizontal)", "Haspelposition (vertikal)", "Drehzahl Einzugsschnecke", "Drehzahl Haspel", "Schnittfrequenz" und/oder Umgebungsinformationen wie "Umgebungstemperatur", "Umgebungsfeuchte", umfasst.

7. Erntemaschine nach einem der vorhergehenden Ansprüche, **dadurch gekennzeichnet, dass** eine Sensoranordnung (20) zur Erfassung zumindest eines Teils des Ernteprozesszustands vorgesehen ist.

8. Erntemaschine nach einem der vorhergehenden Ansprüche, **dadurch gekennzeichnet, dass** eine Ein-/Ausgabevorrichtung (24) vorgesehen ist und dass zumindest ein Teil des Ernteprozesszustands über die Ein-/Ausgabevorrichtung (24) eingebbar ist.

9. Erntemaschine nach einem der vorhergehenden Ansprüche, **dadurch gekennzeichnet, dass** in dem Speicher (5) mindestens ein Initialmodell (5c) hinterlegt ist und dass bei der ersten Ermittlung des mindestens einen Schneidwerksparameters (2a-f) die Rechenvorrichtung (6) die Ermittlung basierend auf dem Initialmodell (5c) vornimmt, vorzugsweise, dass zu Beginn eines Erntebetriebs die Rechenvorrichtung (6) die Ermittlung der Schneidwerksparameter (2a-f) basierend auf dem Initialmodell (5c) vornimmt, vorzugsweise, dass in dem Speicher (5) mindestens zwei Initialmodelle (5c) hinterlegt sind und dass die Rechenvorrichtung (6) in Abhängigkeit vom Ernteprozesszustand ein Initialmodell (5c) auswählt, auf dem die anschließende Ermittlung der Schneidwerksparameter (2a-f) basiert.

10. Erntemaschine nach einem der vorhergehenden Ansprüche, **dadurch gekennzeichnet, dass** die auswählbaren Ernteprozessstrategien jeweils auf die Zielvorgabe der Einstellung oder der Optimierung mindestens eines Ernteprozessparameters wie "Schnittährenverluste", "Spritzkörnerverluste", "Gleichmässigkeit Querverteilung Erntegutstrom", "Zeitliche Varianz Erntegutstrom", "Abscheideverluste", "Reinigungsverluste", "Kraftstoffverbrauch" durch eine entsprechende Vorgabe von Schneidwerksparametern wie "Schneidtischlänge" oder "Ausfahrwinkel Einzugsfinger" gerichtet sind.

11. Erntemaschine nach einem der vorhergehenden Ansprüche, **dadurch gekennzeichnet, dass** das Systemmodell (5b) zumindest einen Teil der funktionalen Zusammenhänge zwischen einem Ernteprozessparameter wie "Schnittährenverluste", "Spritzkörnerverluste", "Gleichmäßigkeit Querverteilung Erntegutstrom", "Zeitliche Varianz Erntegutstrom", "Abscheideverluste", "Reinigungsverluste", "Kraftstoffverbrauch" und mindestens einem weiteren Parameter, insbesondere mindestens einem Schneidwerksparameter wie "Messerbalkenhöhe", "Schnittwinkel", "Schneidtischlänge", "Ausfahrwinkel Einzugsfinger", "Haspelposition (horizontal)", "Haspelposition (vertikal)", "Drehzahl Einzugsschnecke", "Drehzahl Haspel", "Schnittfrequenz" abbildet.

12. Erntemaschine nach Anspruch 11, **dadurch gekennzeichnet, dass** zur Abbildung der funktionalen Zusammenhänge mindestens einem Ernteprozessparameter mindestens ein Kennlinienfeld (A, B) zugeordnet ist und dass der Ernteprozessparameter die Ausgangsgröße des mindestens einen Kennlinienfeldes (A, B) ist.

13. Erntemaschine nach Anspruch 12, **dadurch gekennzeichnet, dass** mindestens ein Schneidwerksparameter, vorzugsweise der Schneidwerksparameter "Messerbalkenhöhe", "Schnittwinkel", "Schneidtischlänge", "Ausfahrwinkel Einzugsfinger", "Haspelposition (horizontal)", "Haspelposition (vertikal)", "Drehzahl Einzugsschnecke", "Drehzahl Haspel" oder "Schnittfrequenz" die Eingangsgrö-ße für das mindestens eine Kennlinienfeld (A, B) ist.

14. Erntemaschine nach Anspruch 12 oder 13, **dadurch gekennzeichnet, dass** die Rechenvorrichtung mindestens ein Kennlinienfeld (A, B) in Abhängigkeit von dem Ernteprozesszustand auswählt und der Ermittlung des mindestens einen Schneidwerksparameters (2a-f) zugrunde legt.

15. Erntemaschine nach einem der vorhergehenden Ansprüche, **dadurch gekennzeichnet, dass** die Rechenvorrichtung (6) das mindestens eine Kennlinienfeld (A, B) im laufenden Erntebetrieb, insbesondere zyklisch, auf den Ernteprozesszustand abgleicht, vorzugsweise, dass in dem Speicher (5) mindestens ein Initialkennlinienfeld hinterlegt ist und dass bei der ersten Ermittlung des mindestens einen Schneidwerksparameters (2a-f) die Rechenvorrichtung (6) die Ermittlung basierend auf dem Initialkennlinienfeld vornimmt.

16. Erntemaschine nach einem der vorhergehenden Ansprüche, **dadurch gekennzeichnet, dass** in dem Speicher (5) mindestens eine Umsetzungsvorschrift (5d) hinterlegt oder hinterlegbar ist, nach der die Rechenvorrichtung (6) basierend auf dem Systemmodell (5b) die Umsetzung der jeweils ausgewählten Ernteprozessstrategie durch Ermittlung des mindestens einen Schneidwerksparameters (2a-f) vornimmt.

17. Erntemaschine nach Anspruch 16, **dadurch gekennzeichnet, dass** eine Umsetzungsvorschrift (5d) die Ermittlung des mindestens einen Schneidwerksparameters (2a-f) in einem Steuervorgang umsetzt, vorzugsweise, dass die Rechenvorrichtung zur Ermittlung des mindestens einen Schneidwerksparameters (2a-f) als Kennfeldsteuerung arbeitet.

18. Erntemaschine nach einem der vorhergehenden Ansprüche, **dadurch gekennzeichnet, dass** zumindest eine auswählbare Ernteprozessstrategie (5a) mindestens zwei Teilstrategien umfasst, die jeweils auf die Einstellung oder Optimierung eines Ernteprozessparameters gerichtet sind.

19. Erntemaschine nach einem der vorhergehenden Ansprüche, **dadurch gekennzeichnet, dass** mindestens zwei auswählbare Ernteprozessstrategien (5a) oder mindestens zwei Teilstrategien einer auswählbaren Ernteprozessstrategie im Hinblick auf ein und denselben Schneidwerksparameter (2a-f) miteinander konkurrieren, vorzugsweise, dass eine Umsetzungsvorschrift (5d) zur gleichzeitigen Umsetzung der miteinander konkurrierenden Strategien eine Mehrzieloptimierung umfasst.

20. Erntemaschine nach einem der vorhergehenden Ansprüche, **dadurch gekennzeichnet, dass** eine Umsetzungsvorschrift (5d) mindestens eine Prämisse umfasst, auf deren Basis die Rechenvorrichtung bei der autonomen Ermittlung des mindestens einen Schneidwerksparameters (2a-f) eine Priorisierung zwischen ausgewählten Ernteprozessstrategien und/oder zwischen Teilstrategien einer ausgewählten Ernteprozessstrategie und/oder zwischen einzustellenden oder zu optimierenden Ernteprozessparametern und/oder zwischen vorzugebenden Schneidwerksparametern vornimmt.

21. Erntemaschine nach einem der vorhergehenden Ansprüche, **dadurch gekennzeichnet, dass** für die Ernteprozessstrategie (5a) der Einstellung oder Optimierung des Ernteprozessparameters "Abscheideverluste" eine Umsetzungsvorschrift (5d) darin besteht, dass die Rechenvorrichtung (6) auf ein Ansteigen des Ernteprozessparameters "Abscheideverluste" basierend auf dem Systemmodell (5d) ein Ansteigen des Schneidwerksparameters "Ausfahrwinkel Einzugsfinger" und/oder ein Ansteigen des Schneidwerksparameters "Schneidtischlänge" vorgibt.

22. Erntemaschine nach einem der vorhergehenden Ansprüche, **dadurch gekennzeichnet, dass** für die Ernteprozessstrategie (5a) der Einstellung oder Optimierung des Ernteprozessparameters "Reinigungsverluste" eine Umsetzungsvorschrift darin besteht, dass die Rechenvorrichtung (6) auf ein Ansteigen des Ernteprozessparameters "Reinigungsverluste" basierend auf dem Systemmodell (5b) ein Absinken des Schneidwerksparameters "Ausfahrwinkel Einzugsfinger" und/oder ein Absinken des Schneidwerksparameters "Schneidtischlänge" vorgibt.

23. Erntemaschine nach einem der vorhergehenden Ansprüche, **dadurch gekennzeichnet, dass** für die Ernteprozessstrategie (5a) der Einstellung oder Optimierung des Ernteprozessparameters "Kraftstoffverbrauch" eine Umsetzungsvorschrift darin besteht, dass die Rechenvorrichtung (6) auf ein Ansteigen des Ernteprozessparameters "Zeitliche Varianz Erntegutstrom" basierend auf dem Systemmodell (5b) ein Ansteigen des Schneidwerksparameters "Ausfahrwinkel Einzugsfinger" und/oder ein Ansteigen des Schneidwerksparameters "Schneidtischlänge" vorgibt.

## Claims

1. Agricultural harvesting machine with a cutting unit (2) designed as a harvesting attachment for cutting and picking up harvested material and with a driver assistance system (4) for controlling the cutting unit (2), wherein the driver assistance system (4) comprises a memory (5) for storing data and a computing device (6) for processing the data stored in the memory (5),
**characterised in that**
**in that** the cutting unit (2), together with the driver assistance system (4), forms an automatic cutting unit (8), **in that** a plurality of selectable harvesting process strategies (5a) for setting or optimising harvesting process parameters are stored in the memory (5), and **in that** the computing device (6) is set up to autonomously determine at least one machine parameter - cutting unit parameters (2a-f) - in order to implement the selected harvesting process strategy (5a) or of the selected harvesting process strategies (5a) to autonomously determine at least one machine parameter - cutting unit parameter (2a-f) - and to specify it to the cutting unit (2), wherein a functional system model (5b) for at least a part of the harvesting machine (1) is stored in the memory (5) and that the computing device (6) is set up to carry out the autonomous determination of the at least one cutting unit parameter (2a-f) based on the system model (5b), wherein the system model (5b) forms functional relationships between a harvesting parameter and at least one cutting unit parameter

2. Harvesting machine according to claim 1, **characterised in that** the harvester (1) is designed as a combine harvester and has a threshing unit (9a) connected downstream of the cutting unit (2), a separating arrangement (9b) connected downstream of the threshing unit (9a) and a cleaning arrangement (9c) connected downstream of the separating arrangement (9b), or that the harvester (1) is designed as a forage harvester and has a pre-compression roller arrangement connected downstream of the cutting unit (2) and a chopping unit connected downstream of the pre-compression roller arrangement.

3. Harvesting machine according to claim 1 or 2, **characterised in that** the cutting unit (2) has the components reel (10), cutter bar (13), cutting table (14) and intake auger (15), and **in that** the associated cutting unit parameters "cutter bar height", "cutting angle", "cutting table length", "reel position (horizontal)", "reel position (vertical)", "intake auger speed", "reel speed", "cutting frequency" can be set by means of the driver assistance system (4).

4. Harvesting machine according to one of the preceding claims, **characterised in that** the intake auger (15) is assigned a plurality of intake fingers (17) which, in relation to the roller rotation, each extend cyclically from the intake auger (15) at an extension angle (2f) of the intake auger (15) and retract into the intake auger at an intake angle of the intake auger, and **in that** at least the cutterbar parameter (2f) "extension angle" can be set via the driver assistance system (4).

5. Harvesting machine according to one of the preceding claims, **characterised**
**in that** the computing device (6) adjusts the system model (5b) to the current harvesting process state during harvesting operation, in particular cyclically.

6. Harvesting machine according to one of the preceding claims, **characterised in that** the harvesting process status contains field crop information such as "crop density", "crop height", "crop moisture", "stalk length", "storage proportion" and/or harvesting process parameters such as "cut ear losses", "spray grain losses", "uniformity of transverse distribution of crop flow", "temporal variance of crop flow" and/or "crop density", "separation losses", "cleaning losses", "fuel consumption" and/or cutting unit parameters such as "cutter bar height", "cutting angle", "cutting table length", "retraction finger extension angle", "reel position (horizontal)", "reel position (vertical)", "infeed auger speed", "reel speed", "cutting frequency" and/or environmental information such as "ambient temperature", "ambient humidity".

7. Harvesting machine according to one of the preceding claims, **characterised in that** a sensor arrangement (20) is provided for detecting at least part of the harvesting process state.

8. Harvesting machine according to one of the preceding claims, **characterised in that** an input/output device (24) is provided and **in that** at least part of the harvesting process state can be input via the input/output device (24).

9. Harvesting machine according to one of the preceding claims, **characterised in that** at least one initial model (5c) is stored in the memory (5) and **in that**, during the first determination of the at least one cutting unit parameter (2a-f), the computing device (6) carries out the determination on the basis of the initial model (5c), preferably, **in that**, at the start of a harvesting operation, the computing device (6) carries out the determination of the cutterbar parameters (2a-f) based on the initial model (5c), preferably **in that** at least two initial models (5c) are stored in the memory (5) and **in that** the computing device (6) selects an initial model (5c) as a function of the harvesting process state, on which the subsequent determination of the cutterbar parameters (2a-f) is based.

10. Harvesting machine according to one of the preceding claims, **characterised**
**in that** the selectable harvesting process strategies are each directed towards the target specification of the setting or optimisation of at least one harvesting process parameter such as "cut ear losses", "spray grain losses", "uniformity of transverse distribution of crop flow", "temporal variance of crop flow", "separation losses", "cleaning losses", "fuel consumption" by a corresponding specification of cutting unit parameters such as "cutting table length" or "extension angle of intake finger".

11. Harvesting machine according to one of the preceding claims, **characterised in that** the system model (5b) represents at least some of the functional relationships between a harvesting process parameter such as "cut ear losses", "spray grain losses", "uniformity of transverse distribution of crop flow", "temporal variance of crop flow", "separation losses", "cleaning losses", "fuel consumption" and at least one further parameter, in particular at least one cutterbar parameter such as "cutterbar height", "cutting angle", "cutting table length", "extension angle of intake", "cleaning losses", "fuel consumption" and at least one other parameter, in particular at least one cutterbar parameter such as "cutterbar height", "cutting angle", "cutting table length", "extension angle of intake finger", "reel position (horizontal)", "reel position (vertical)", "intake auger speed", "reel speed", "cutting frequency".

12. Harvesting machine according to claim 11, **characterised in that** at least one characteristic curve field (A, B) is assigned to at least one harvesting process parameter for mapping the functional relationships and **in that** the harvesting process parameter is the output variable of the at least one characteristic curve field (A, B).

13. Harvester according to claim 12, **characterised in that** at least one cutterbar parameter, preferably the cutterbar parameter "cutterbar height", "cutting angle", "cutting table length", "extension angle retraction finger", "reel position (horizontal)", "reel position (vertical)", "intake auger speed", "reel speed" or "cutting frequency" is the input variable for the at least one characteristic curve field (A, B).

14. Harvesting machine according to claim 12 or 13, **characterised in that** the calculating device selects at least one characteristic curve field (A, B) as a function of the harvesting process state and bases the determination of the at least one cutting unit parameter (2a-f) on it.

15. Harvesting machine according to one of the preceding claims, **characterised**
**in that** the computing device (6) compares the at least one characteristic curve field (A, B) with the harvesting process state during ongoing harvesting operation, in particular cyclically, preferably in that at least one initial characteristic curve field is stored in the memory (5) and in that, during the first determination of the at least one cutting unit parameter (2a-f), the computing device (6) carries out the determination based on the initial characteristic curve field.

16. Harvesting machine according to one of the preceding claims, **characterised in that** at least one conversion rule (5d) is stored or can be stored in the memory (5), according to which the computing device (6) carries out the conversion of the respectively selected harvesting process strategy based on the system model (5b) by determining the at least one cutting unit parameter (2a-f).

17. Harvesting machine according to claim 16, **characterised in that** a conversion rule (5d) converts the determination of the at least one cutting unit parameter (2a-f) into a control process, preferably **in that** the calculation device for determining the at least one cutting unit parameter (2a-f) operates as a characteristic map control.

18. Harvesting machine according to one of the preceding claims, **characterised in that** at least one selectable harvesting process strategy (5a) comprises at least two sub-strategies, each of which is directed towards the adjustment or optimisation of a harvesting process parameter.

19. Harvesting machine according to one of the preceding claims, **characterised in that** at least two selectable harvesting process strategies (5a) or at least two partial strategies of a selectable harvesting process strategy compete with one another with regard to one and the same cutting unit parameter (2a-f), preferably in that an implementation rule (5d) for simultaneous implementation of the competing strategies comprises a multi-objective optimisation.

20. Harvesting machine according to one of the preceding claims, **characterised in that** a conversion rule (5d) comprises at least one premise on the basis of which the computing device prioritises between selected harvesting process strategies and/or between sub-strategies of a selected harvesting process strategy and/or between harvesting process parameters to be set or optimised and/or between cutting unit parameters to be preset during the autonomous determination of the at least one cutting unit parameter (2a-f).

21. Harvesting machine according to one of the preceding claims, **characterised in that**, for the harvesting process strategy (5a) of setting or optimising the harvesting process parameter "separation losses", a conversion rule (5d) consists in that the computing device (6), in response to an increase in the harvesting process parameter "separation losses" based on the system model (5d), specifies an increase in the cutting unit parameter "extension angle of feed finger" and/or an increase in the cutting unit parameter "cutting table length".

22. Harvesting machine according to one of the preceding claims, **characterised in that** for the harvesting process strategy (5a) for setting or optimising the harvesting process parameter "cleaning losses", an implementation rule consists in the fact that the calculation device (6) specifies a decrease in the cutting unit parameter "extension angle of feed finger" and/or a decrease in the cutting unit parameter "cutting table length" in response to an increase in the harvesting process parameter "cleaning losses" based on the system model (5b).

23. Harvesting machine according to one of the preceding claims, **characterised in that** for the harvesting process strategy (5a) of setting or optimising the harvesting process parameter "fuel consumption", an implementation rule consists in that the calculation device (6), in response to an increase in the harvesting process parameter "temporal variance of crop flow" based on the system model (5b), specifies an increase in the cutting unit parameter "extension angle of intake finger" and/or an increase in the cutting unit parameter "cutting table length".

## Revendications

1. Récolteuse agricole comprenant une barre de coupe (2) réalisée comme outil frontal de récolte, destinée à la coupe et au ramassage de cultures à récolter, et comprenant un système d'assistance au conducteur (4) destiné à commander la barre de coupe (2), le système d'assistance au conducteur (4) comportant une mémoire (5) pour enregistrer des données et un dispositif de calcul (6) pour traiter les données enregistrées dans la mémoire (5),
**caractérisée en ce que**
la barre de coupe (2) forme conjointement avec le système d'assistance au conducteur (4) un automate de barre de coupe (8), par le fait qu'une pluralité de stratégies de processus de récolte (5a) sélectionnables, destinées au réglage ou à l'optimisation de paramètres de processus de récolte, sont enregistrées dans la mémoire (5), et par le fait que le dispositif de calcul (6) est conçu pour déterminer de manière autonome au moins un paramètre de machine - paramètre de barre de coupe (2a-f) -, en vue de la mise en oeuvre de la stratégie de processus de récolte (5A) sélectionnée ou des stratégies de processus de récolte (5a) sélectionnées, et de la prédéfinir pour la barre de coupe (2), sachant qu'un modèle de système (5b) fonctionnel pour au moins une partie de la récolteuse (1) est enregistré dans la mémoire (5), et **en ce que** le dispositif de calcul (6) est conçu pour procéder à la détermination autonome du paramètre de barre de coupe (2a-f), au nombre d'au moins un, sur la base du modèle de système (5b), le modèle de système (5b) établissant des relations fonctionnelles entre un paramètre de récolte et au moins un paramètre de barre de coupe.

2. Récolteuse selon la revendication 1, **caractérisée en ce que** la récolteuse (1) est réalisée sous forme de moissonneuse-batteuse et présente un batteur (9a) placé à la suite de la barre de coupe (2), un dispositif séparateur (9b) placé à la suite du batteur (9a), et un dispositif nettoyeur (9c) placé à la suite du dispositif séparateur (9b), ou **en ce que** la récolteuse (1) est réalisée sous forme de ramasseusehacheuse et présente un dispositif à rouleau de précompression placé à la suite de la barre de coupe (2) et un dispositif hacheur placé à la suite du dispositif à rouleau de précompression.

3. Récolteuse selon la revendication 1 ou 2, **caractérisée en ce que** la barre de coupe (2) présents les composants que sont le rabatteur (10), la barre porte-lames (13), la table de coupe (14) et la vis d'alimentation (15), et **en ce que** les paramètres de barre de coupe associés, à savoir « hauteur de la barre porte-lames », « angle de coupe », « longueur de la table de coupe », « position du rabatteur (horizontale) », « position du rabatteur (verticale) », « vitesse de rotation de la vis d'alimentation », « vitesse de rotation du rabatteur », « fréquence de coupe », peuvent être réglés à l'aide du système d'assistance au conducteur (4).

4. Récolteuse selon l'une des revendications précédentes, **caractérisée en ce que** sont associés à la vis d'alimentation (15), plusieurs doigts d'alimentation (17) qui se déploient de la vis d'alimentation (15) sous un angle de déploiement (2f) de la vis d'alimentation (15), respectivement de manière cyclique par rapport à la rotation du cylindre, et rentrent dans la vis d'alimentation sous un angle de rentrée de la vis d'alimentation, et **en ce qu'**au moins le paramètre de barre de coupe (2f) « angle de déploiement » peut être réglé par l'intermédiaire du système d'assistance au conducteur (4).

5. Récolteuse selon l'une des revendications précédentes, **caractérisée en ce que** pendant l'opération de récolte en cours, le dispositif de calcul (6) ajuste le modèle de système (5b) sur l'état actuel du processus de récolte, notamment de manière cyclique.

6. Récolteuse selon l'une des revendications précédentes, **caractérisée en ce que** l'état du processus de récolte comprend des informations concernant la culture, telles que « densité de culture », « hauteur de culture », « humidité de culture », « longueur des tiges », « part de stockage », et/ou des paramètres de processus de récolte, tels que « pertes d'épis coupés », « pertes de grains projetés », « uniformité de la répartition transversale du flux de récolte », « variation dans le temps du flux de récolte », « pertes à la séparation », « pertes au nettoyage », « consommation de carburant », et/ou des paramètres de barre de coupe, tels que « hauteur de la barre porte-lames », « angle de coupe », « longueur de la table de coupe », « angle de déploiement des doigts d'alimentation », « position du rabatteur (horizontale) », « position rabatteur (verticale) », « vitesse de rotation de la vis d'alimentation », « vitesse de rotation du rabatteur », « fréquence de coupe », et/ou des informations sur l'environnement, telles que « température ambiante », « humidité ambiante ».

7. Récolteuse selon l'une des revendications précédentes, **caractérisée en ce qu'**un dispositif de capteur (20) est prévu pour détecter au moins une partie de l'état du processus de récolte.

8. Récolteuse selon l'une des revendications précédentes, **caractérisée en ce qu'**un dispositif d'entrée/sortie (24) est prévu et qu'au moins une partie de l'état du processus de récolte peut être saisie par l'intermédiaire du dispositif d'entrée/sortie (24).

9. Récolteuse selon l'une des revendications précédentes, **caractérisée en ce qu'**au moins un modèle initial (5c) est enregistré dans la mémoire (5) et que lors de la première détermination du paramètre de barre de coupe (2a-f), au nombre d'au moins un, le dispositif de calcul (6) procède à la détermination sur la base du modèle initial (5c), de préférence qu'au début d'une opération de récolte, le dispositif de calcul (6) procède à la détermination des paramètres de barre de coupe (2a-f) sur la base du modèle initial (5c), de préférence qu'au moins deux modèles initiaux (5c) sont enregistrés dans la mémoire (5) et qu'en fonction de l'état du processus de récolte, le dispositif de calcul (6) sélectionne un modèle initial (5c) sur lequel sera basée la détermination subséquente des paramètres de barre de coupe (2a-f).

10. Récolteuse selon l'une des revendications précédentes, **caractérisée en ce que** les stratégies de processus de récolte sélectionnables sont orientées respectivement vers l'objectif du réglage ou de l'optimisation d'au moins un paramètre de processus de récolte, tel que « pertes d'épis coupés », « pertes de grains projetés », « uniformité de la répartition transversale du flux de récolte », « variation dans le temps du flux de récolte », « pertes à la séparation », « pertes au nettoyage », « consommation de carburant », par le biais d'une prédéfinition correspondante de paramètres de barre de coupe, tels que « longueur de la table de coupe », « angle de déploiement des doigts d'alimentation ».

11. Récolteuse selon l'une des revendications précédentes, **caractérisée en ce que** le modèle de système (5b) reproduit au moins une partie des relations fonctionnelles entre un paramètre de processus de récolte, tel que « pertes d'épis coupés », « pertes de grains projetés », « uniformité de la répartition transversale du flux de récolte », « variation dans le temps du flux de récolte », « pertes à la séparation », « pertes au nettoyage », « consommation de carburant », et au moins un autre paramètre, notamment au moins un paramètre de barre de coupe, tel que « hauteur de la barre porte-lames », « angle de coupe », « longueur de la table de coupe », « angle de déploiement des doigts d'alimentation », « position du rabatteur (horizontale) », « position du rabatteur (verticale) », « vitesse de rotation de la vis d'alimentation », « vitesse de rotation du rabatteur », « fréquence de coupe ».

12. Récolteuse selon la revendication 11, **caractérisée en ce que** pour la reproduction des relations fonctionnelles, au moins un réseau de courbes caractéristiques (A, B) est associé à au moins un paramètre de processus de récolte, et **en ce que** le paramètre de processus de récolte est la grandeur de sortie du réseau de courbes caractéristiques (A, B), au nombre d'au moins un.

13. Récolteuse selon la revendication 12, **caractérisée en ce qu'**au moins un paramètre de barre de coupe, de préférence le paramètre de barre de coupe « hauteur de la barre porte-lames », « angle de coupe », « longueur de la table de coupe », « angle de déploiement des doigts d'alimentation », « position du rabatteur (horizontale) », « position du rabatteur (verticale) », « vitesse de rotation de la vis d'alimentation », « vitesse de rotation du rabatteur » ou « fréquence de coupe » est la grandeur d'entrée pour le réseau de courbes caractéristiques (A, B).

14. Récolteuse selon la revendication 12, **caractérisée en ce que** le dispositif de calcul sélectionne au moins un réseau de courbes caractéristiques (A, B) en fonction de l'état du processus de récolte et l'utilise comme base pour la détermination du paramètre de barre de coupe (2a-f), au nombre d'au moins un.

15. Récolteuse selon l'une des revendications précédentes, **caractérisée en ce que** pendant l'opération de récolte en cours, le dispositif de calcul (6) adapte le réseau de courbes caractéristiques (A, B), au nombre d'au moins un, à l'état du processus de récolte, notamment de manière cyclique, de préférence qu'au moins un réseau de courbes caractéristiques initial est enregistré dans la mémoire (5), et que lors de la première détermination du paramètre de barre de coupe (2a-f), au nombre d'au moins un, le dispositif de calcul (6) procède à la détermination sur la base du réseau de courbes caractéristiques initial.

16. Récolteuse selon l'une des revendications précédentes, **caractérisée en ce qu'**au moins une consigne de mise en oeuvre (5d) est enregistrée ou peut être enregistrée dans la mémoire (5), selon laquelle le dispositif de calcul (6), sur la base du modèle de système (5b), procède à la mise en oeuvre de la stratégie de processus de récolte respectivement sélectionnée, en déterminant le paramètre de barre de coupe (2a-f), au nombre d'au moins un.

17. Récolteuse selon la revendication 16, **caractérisée en ce qu'**une consigne de mise en oeuvre (5d) met en oeuvre la détermination du paramètre de barre de coupe (2a-f), au nombre d'au moins un, lors d'une opération de commande, de préférence que le dispositif de calcul fonctionne comme commande de réseau de courbes caractéristiques pour la détermination du paramètre de barre de coupe (2a-f), au nombre d'au moins un.

18. Récolteuse selon l'une des revendications précédentes, **caractérisée en ce qu'**au moins une stratégie de processus de récolte (5a) sélectionnable comprend au moins deux sous-stratégies qui visent respectivement le réglage ou l'optimisation d'un paramètre de processus de récolte.

19. Récolteuse selon l'une des revendications précédentes, **caractérisée en ce qu'**au moins deux stratégies de processus de récolte (5a) sélectionnables ou au moins deux sous-stratégies d'une stratégie de processus de récolte sélectionnable sont en concurrence l'une avec l'autre par rapport à un même paramètre de barre de coupe (2a-f), de préférence qu'une consigne de mise en oeuvre (5d) pour la mise en oeuvre simultanée des stratégies mutuellement en concurrence comprend une optimisation à objectifs multiples.

20. Récolteuse selon l'une des revendications précédentes, **caractérisée en ce qu'**une consigne de mise en oeuvre (5d) comprend au moins une prémisse, sur la base de laquelle le dispositif de calcul, lors de la détermination autonome du paramètre de barre de coupe (2a-f), au nombre d'au moins un, procède à une priorisation entre des stratégies de processus de récolte sélectionnées et/ou entre des sous-stratégies d'une stratégie de processus de récolte sélectionnée et/ou entre des paramètres de processus de récolte à régler ou à optimiser et/ou entre des paramètres de barre de coupe à prédéfinir.

21. Récolteuse selon l'une des revendications précédentes, **caractérisée en ce que** pour la stratégie de processus de récolte (5a) du réglage ou de l'optimisation du paramètre de processus de récolte « pertes à la séparation », une consigne de mise en oeuvre (5d) consiste à ce que le dispositif de calcul (6), suite à une augmentation du paramètre de processus de récolte « pertes à la séparation », sur la base du modèle de système (5b), prédéfinit une augmentation du paramètre de barre de coupe « angle de déploiement des doigts d'alimentation » et/ou une augmentation du paramètre de barre de coupe « longueur de la table de coupe ».

22. Récolteuse selon l'une des revendications précédentes, **caractérisée en ce que** pour la stratégie de processus de récolte (5a) du réglage ou de l'optimisation du paramètre de processus de récolte « pertes au nettoyage », une consigne de mise en oeuvre consiste à ce que le dispositif de calcul (6), suite à une augmentation du paramètre de processus de récolte « pertes au nettoyage », sur la base du modèle de système (5b), prédéfinit une réduction du paramètre de barre de coupe « angle de déploiement des doigts d'alimentation » et/ou une réduction du paramètre de barre de coupe « longueur de la table de coupe ».

23. Récolteuse selon l'une des revendications précédentes, **caractérisée en ce que** pour la stratégie de processus de récolte (5a) du réglage ou de l'optimisation du paramètre de processus de récolte « consommation de carburant », une consigne de mise en oeuvre consiste à ce que le dispositif de calcul (6), suite à une augmentation du paramètre de processus de récolte « variation dans le temps du flux de récolte », sur la base du modèle de système (5b), prédéfinit une augmentation du paramètre de barre de coupe « angle de déploiement des doigts d'alimentation » et/ou une augmentation du paramètre de barre de coupe « longueur de la table de coupe ».
